# EUROPEAN PATENT APPLICATION

(11) **EP 4 831 503 A1**
(43) Date of publication of application: **28.10.2026**
(21) Application number: 24905788.6
(22) Date of filing: 16.10.2024
(51) Int. Cl.: F16F 9/04, F16F 13/20, B60G 13/14

(54) **AIR SPRING SUPPORT, AIR SPRING, AND VEHICLE**

(30) Priority: 20.12.2023 CN 202323486303 U
(71) Applicant: BYD Company Limited, Shenzhen, Guangdong 518118 (CN)
(72) Inventor: WEI, Qinghai, Shenzhen, Guangdong 518118 (CN); ZHANG, Feng, Shenzhen, Guangdong 518118 (CN); WEN, Xin, Shenzhen, Guangdong 518118 (CN); SONG, Ruisheng, Shenzhen, Guangdong 518118 (CN); CHEN, Wei, Shenzhen, Guangdong 518118 (CN)
(74) Representative: Mathys & Squire
(86) International application number: PCT/CN2024/125311
(87) International publication number: WO 2025/130299

(57) **Abstract**

An air spring support, an air spring, and a vehicle are provided. The air spring support includes an upper air chamber assembly and a strut mount assembly. The upper air chamber assembly is provided with a first accommodation cavity. The strut mount assembly includes an elastomer, the elastomer is provided with a first flange, and the elastomer includes a first cavity and a second cavity that are separated by the first flange. The first flange is provided with at least one groove. The strut mount assembly is disposed in the first accommodation cavity, the first flange is attached to a bottom wall of the first accommodation cavity, and the first cavity communicates with the second cavity through the groove.

## Description

This application claims priority to Chinese Patent Application No. 202323486303.2, filed on December 20, 2023 and entitled "AIR SPRING SUPPORT, AIR SPRING, AND VEHICLE", which is incorporated herein by reference in its entirety.

### TECHNICAL FIELD

This application belongs to the field of vehicle technologies, and in particular, to an air spring support, an air spring, and a vehicle.

### BACKGROUND

In conventional technologies, because an elastomer is usually pressed against an upper air chamber assembly to form a sealed space, during extension and compression of an air spring, air pressure inside a cavity of the air spring changes. In this case, air pressure on two sides of the elastomer varies, causing the elastomer to creep in a radial direction. This results in adverse impact on durability of a strut mount assembly.

### SUMMARY

To resolve the foregoing problem, this application provides an air spring support, an air spring, and a vehicle.

According to a first aspect of embodiments of this application, this application provides an air spring support, including:
an upper air chamber assembly, wherein the upper air chamber assembly is provided with a first accommodation cavity; and
a strut mount assembly, wherein the strut mount assembly includes an elastomer, the elastomer being provided with a first flange, the elastomer including a first cavity and a second cavity that are separated by the first flange, and the first flange being provided with at least one groove.

The strut mount assembly is disposed in the first accommodation cavity, the first flange is attached to a bottom wall of the first accommodation cavity, and the first cavity communicates with the second cavity through the groove.

Optionally, the air spring support further includes a first sealing ring, and the first sealing ring is disposed between the first accommodation cavity and the strut mount assembly.

Optionally, the strut mount assembly further includes an outer frame and an inner frame, the elastomer is disposed between the outer frame and the inner frame, and the first flange protrudes from the outer frame and the inner frame.

Optionally, the outer frame is provided with at least one exhaust groove.

Optionally, the exhaust groove is in a one-to-one correspondence with the groove.

Optionally, the inner frame is provided with a mounting hole, and the mounting hole is configured to mount a shock absorber piston rod.

Optionally, the upper air chamber assembly includes a first housing and a second housing, the first housing is connected to the second housing, the strut mount assembly is disposed in the first housing, and material strength of the first housing is greater than material strength of the second housing.

Optionally, the air spring support further includes a buffer, the second housing includes a second accommodation cavity, and the buffer is disposed in the second accommodation cavity, and is fastened to a side of the bottom wall of the first accommodation cavity that is away from the strut mount assembly.

Optionally, the air spring support further includes a pressing member, the elastomer further includes a second flange, and the pressing member is disposed in the first accommodation cavity, and is attached to the second flange.

According to a second aspect of embodiments of the application, this application provides an air spring, including the foregoing air spring support.

According to a third aspect of embodiments of the application, this application provides a vehicle, including the foregoing air spring.

Other features and advantages of this application will become clear from the following detailed descriptions of example embodiments of this application with reference to accompanying drawings.

### BRIEF DESCRIPTION OF DRAWINGS

Accompanying drawings, incorporated into this specification and constituting a part of this specification, show embodiments confirming to this application, and are used together with this specification to explain a principle of this application.
FIG. 1 is a diagram of a structure of an air spring support according to a specific implementation of this application;
FIG. 2 is a sectional view of an air spring support according to a specific implementation of this application;
FIG. 3 is a sectional view of an upper air chamber assembly according to a specific implementation of this application;
FIG. 4 is a diagram of a structure of a strut mount assembly according to a specific implementation of this application;
FIG. 5 is a sectional view of a strut mount assembly according to a specific implementation of this application;
FIG. 6 is a schematic exploded view of an air spring according to a specific implementation of this application; and
FIG. 7 is a sectional view of an air spring according to a specific implementation of this application.

Descriptions of reference numerals: air spring support 100; upper air chamber assembly 1; first housing 11; first accommodation cavity 111; bottom wall 111a; second housing 12; second accommodation cavity 121; strut mount assembly 2; outer frame 21; an exhaust groove 211; inner frame 22; mounting hole 221; elastomer 23; first flange 231; groove 232; second flange 233; first cavity 234; second cavity 235; buffer 3; pressing member 4; clearance hole 41; first sealing ring 5; second sealing ring 6; fastening nut 7; communicating air passage 8; air passage 9; shock absorber 200; shock absorber piston rod 201; air spring bladder 300; clamping ring 301; and air spring 400.

### DESCRIPTION OF EMBODIMENTS

Various example embodiments of this application are described in detail with reference to accompanying drawings. It will be noted that, unless otherwise specified, relative arrangement of components and steps, and numerical expressions and values described in these embodiments do not limit the scope of this application.

The following descriptions of at least one example embodiment are merely illustrative in practice and are not intended to limit this application, and usage or application thereof.

Technologies, methods, and devices are known to a person of ordinary skill in the related technologies may not be discussed in detail. In proper cases, the technologies, methods, and devices will be considered as a part of the specification.

In all examples shown and discussed herein, any specific value will be construed as merely an example but not a limitation. Therefore, there may be different values in other examples of example embodiments.

It will be noted that similar reference numerals and letters indicate similar items in the following accompanying drawings, and therefore, once an item is defined in one of the accompanying drawings, no further discussion is required in the following accompanying drawings.

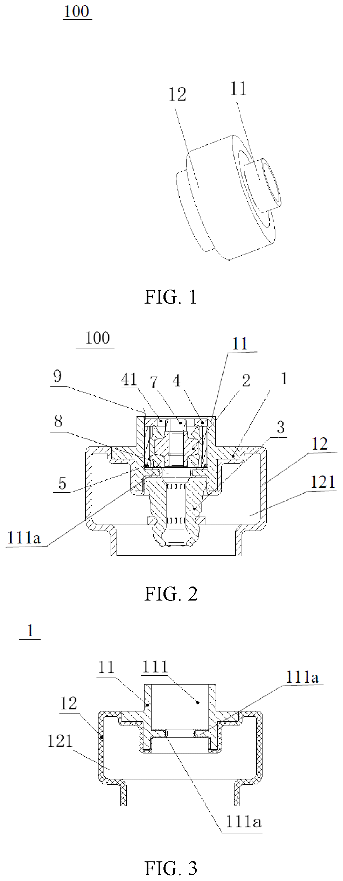

As shown in FIG. 1 to FIG. 5, according to a first aspect of embodiments of this application, this application provides an air spring support 100, including an upper air chamber assembly 1 and a strut mount assembly 2. The upper air chamber assembly 1 is provided with a first accommodation cavity 111. The strut mount assembly 2 includes an elastomer 23, the elastomer 23 is provided with a first flange 231, and the elastomer 23 includes a first cavity 234 and a second cavity 235 that are separated by the first flange 231 in a radial direction of the elastomer 23. The first flange 231 is provided with at least one groove 232. The strut mount assembly 2 is disposed in the first accommodation cavity 111, the first flange 231 is attached to a bottom wall 111a of the first accommodation cavity 111, and the first cavity 234 communicates with the second cavity 235 through the groove 232.

The air spring support 100 is connected to a vehicle body to provide support for an air spring 400.

In conventional technologies, during extension and compression of the air spring 400, air pressure in a cavity of the air spring 400 changes. The first flange 231 is attached to the bottom wall 111a of the first accommodation cavity 111, to cause the first cavity 234 to be a sealed space. When there is an air pressure difference between the first cavity 234 and the second cavity 235 of the elastomer 23, the first flange 231 of the elastomer 23 is caused to creep in the radial direction of the elastomer 23 (an opening of the first flange 231 contracts and expands), causing adverse impact on durability of the strut mount assembly 2.

As shown in FIG. 2, the first flange 231 is provided with the groove 232, and the groove 232 communicates with the first cavity 234 and the second cavity 235, so that the first cavity 234 and the second cavity 235 form a communicating air passage 8. Even if the first flange 231 is attached to the bottom wall 111a of the first accommodation cavity 111, the first cavity 234 may communicate with the second cavity 235 through the groove 232, so that there is no air pressure difference between the first cavity 234 and the second cavity 235, preventing the elastomer 23 from moving in the radial direction. In this way, the durability of the strut mount assembly 2 can be improved.

The first flange 231 may be provided with one groove 232, two grooves 232, three grooves 232, or even more. The first flange 231 is attached to the bottom wall 111a of the first accommodation cavity 111, an objective of which includes enabling the elastomer 23 to bear a specific load, thereby improving rigidity and reliability of the strut mount assembly 2. If there are an excessively large quantity of grooves 232, the first flange 231 may not be able to bear a specific load for the strut mount assembly 2. If there are an excessively small quantity of grooves 232, the pressure difference between the first cavity 234 and the second cavity 235 cannot be quickly adjusted.

Optionally, the first flange 231 is provided with two grooves 232, and positions of the two grooves 232 are symmetrically arranged with respect to an axis of the strut mount assembly 2. In this way, gas flowing from the two grooves 232 can induce convection, to quickly adjust the air pressure difference between the first cavity 234 and the second cavity 235, thereby preventing the elastomer 23 from moving in the radial direction of the elastomer 23.

Optionally, the air spring support 100 further includes a first sealing ring 5, and the first sealing ring 5 is disposed between the first accommodation cavity 111 and the strut mount assembly 2. As shown in FIG. 2, the air spring support 100 further includes the first sealing ring 5, and the first sealing ring 5 is disposed between the first accommodation cavity 111 and the strut mount assembly 2, an objective of which is to form an air-tight structure between the first accommodation cavity 111 and the strut mount assembly 2, thereby preventing gas from leaking from between an outer wall of the strut mount assembly 2 and an inner wall of the first accommodation cavity 111. A product undergoes air tightness detection on the air-tight structure by using helium in a production line, to ensure a takt time, without a limiting fixture, so that the air spring 400 is in a free state. When the air spring 400 is inflated with gas, the strut mount assembly 2 is subject to a downward pulling force from a shock absorber piston rod 201, which increases a squeezing force between the first flange 231 of the elastomer 23 and the bottom wall 111a of the first accommodation cavity 111, thereby enhancing air tightness effect between the first flange 231 of the elastomer 23 and the bottom wall 111a of the first accommodation cavity 111. Fitting between the first flange 231 and the bottom wall 111a of the first accommodation cavity 111 generates sealing effect at a front end of the first sealing ring 5, causing a sealing failure of the first sealing ring 5 unable to be accurately detected. In other words, a false sealing phenomenon is generated, causing the air tightness detection invalid. When the air spring 400 is mounted on a vehicle, the pulling force from the shock absorber piston rod 201 is eliminated, and there is a deflection. During a wheel upward jump, the shock absorber piston rod 201 exerts an upward pushing force on the strut mount assembly 2, and sealing formed between the first flange 231 of the elastomer 23 and the bottom wall 111a of the first accommodation cavity 111 may fail. As a result, a failure in air tightness between the strut mount assembly 2 of the air spring 400 and the upper air chamber assembly 1 becomes apparent. After the groove 232 is provided, it is ensured that when the first sealing ring 5 fails, gas can be discharged to the outside of the air spring 400 through the groove 232, allowing a helium air tightness test on the production line to effectively detect the failure, thereby preventing a defective product from being shipped and mounted on the vehicle.

Optionally, the strut mount assembly 2 further includes an outer frame 21 and an inner frame 22, the elastomer 23 is disposed between the outer frame 21 and the inner frame 22, and the first flange 231 protrudes from the outer frame 21 and the inner frame 22 in an axial direction of the elastomer 23.

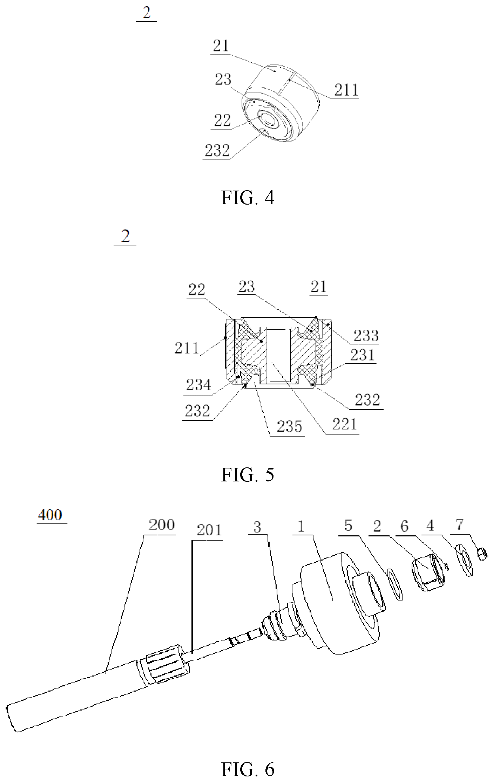

As shown in FIG. 4 and FIG. 5, the strut mount assembly 2 further includes the inner frame 22 and the outer frame 21. The elastomer 23 is disposed between the inner frame 22 and the outer frame 21, and the elastomer 23 wraps the inner frame 22. The first flange 231 of the elastomer 23 protrudes from a lower end surface of the outer frame 21 and a lower end surface of the inner frame 22. Therefore, when the strut mount assembly 2 is placed in the first accommodation cavity 111, the first flange 231 can be attached to the bottom wall 111a of the first accommodation cavity 111, so that the elastomer 23 can bear a specific load, to improve the rigidity and the reliability of the strut mount assembly 2.

Optionally, the outer frame 21 and the inner frame 22 are made of metal materials, so that the rigidity and the reliability of the strut mount assembly 2 can be further improved.

Optionally, the outer frame 21 may be in clearance fit, transition fit, or interference fit with the inner wall of the first accommodation cavity 111.

Optionally, the outer frame 21 is provided with at least one exhaust groove 211.

As shown in FIG. 4 and FIG. 5, the outer frame 21 is provided with at least one exhaust groove 211. The exhaust groove 211 is provided on an outer wall of the outer frame 21, to form an air passage 9 with an inner wall of a first housing 11. Generally, the outer frame 21 is in interference fit with the first accommodation cavity 111. This may have a specific air tightness function, which affects determining of actual leakage. In other words, leakage may be mistakenly determined as non-leakage. The outer wall of the outer frame 21 is provided with the exhaust groove 211. During detection, if the first sealing ring 5 fails, gas may be discharged to the outside of the air spring 400 through the exhaust groove 211 without obstruction, so that it can be ensured that an air tightness test during detection is effective detection, preventing the defective product from being shipped and mounted on the vehicle.

Optionally, the exhaust groove 211 is provided in a one-to-one correspondence with the groove 232, so that gas is discharged through the groove 232 and the corresponding exhaust groove 211 more smoothly.

Optionally, the inner frame 22 is provided with a mounting hole 221, and the mounting hole 221 is configured to mount the shock absorber piston rod 201.

As shown in FIG. 5 to FIG. 7, the inner frame 22 is provided with the mounting hole 221, and the shock absorber piston rod 201 passes through the mounting hole 221 and is locked onto the inner frame 22 by a fastening nut 7. The shock absorber piston rod 201 is provided with a second sealing ring 6, and air tightness between the mounting hole 221 and the upper air chamber assembly 1 is implemented through the second sealing ring 6.

Optionally, the upper air chamber assembly 1 includes a first housing 11 and a second housing 12, the first housing 11 is connected to the second housing 12, the strut mount assembly 2 is disposed in the first housing 11, and material strength of the first housing 11 is greater than material strength of the second housing 12.

As shown in FIG. 3, the upper air chamber assembly 1 includes the first housing 11 and the second housing 12, and the first housing 11 is connected to the second housing 12. The first accommodation cavity 111 is provided in the first housing 11, so that the strut mount assembly 2 is disposed in the first housing 11. The material strength of the first housing 11 is greater than the material strength of the second housing 12. The first housing 11 needs to provide structural strength for the strut mount assembly 2.

Optionally, to make the upper air chamber assembly 1 a lightweight structure, the first housing 11 is made of an aluminum mechanical part, the second housing 12 is made of a plastic part, and the first housing 11 and the second housing 12 are formed through embedded injection molding. Such an arrangement can ensure structural strength of the upper air chamber assembly 1, and can also reduce a weight of the upper air chamber assembly 1.

Optionally, the air spring support 100 further includes a buffer 3, the second housing 12 includes a second accommodation cavity 121, and the buffer 3 is disposed in the second accommodation cavity 121, and is fastened to a side of the bottom wall 111a of the first accommodation cavity 111 that is away from the strut mount assembly 2.

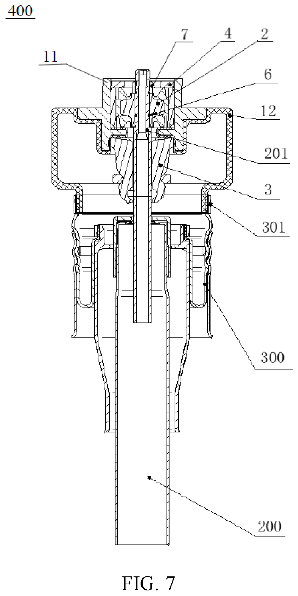

As shown in FIG. 2 and FIG. 3, the second housing 12 is provided with the second accommodation cavity 121, and the second accommodation cavity 121 communicates with the first accommodation cavity 111. As shown in FIG. 2 and FIG. 7, the buffer 3 is disposed in the second accommodation cavity 121, and is fastened to the side of the bottom wall 111a of the first accommodation cavity 111 that is away from the strut mount assembly 2. During the wheel upward jump, the buffer 3 functions as a limiting buffer block. To be specific, when the air spring 400 is compressed to a specific position, a shock absorber 200 starts to be in contact with the buffer 3, and the buffer 3 is compressed to provide buffer effect for the shock absorber 200.

Optionally, the air spring support 100 further includes a pressing member 4, the elastomer 23 further includes a second flange 233, and the pressing member 4 is disposed in the first accommodation cavity 111, and is attached to the second flange 233.

As shown in FIG. 2 and FIG. 5, the elastomer 23 further includes the second flange 233, and the second flange 233 is disposed on a side of the elastomer 23 that is away from the first flange 231. The air spring support 100 further includes the pressing member 4. The pressing member 4 is disposed in the first accommodation cavity 111, is attached to the second flange 233, and can press the strut mount assembly 2 in the first accommodation cavity 111, so that the strut mount assembly 2 can be prevented from being detached from the first accommodation cavity 111.

Optionally, a clearance hole 41 is provided in a middle portion of the pressing member 4, and an inner diameter of the avoidance hole 41 is greater than an outer diameter of the fastening nut 7 and less than an inner diameter of the second flange 233. When the shock absorber piston rod 201 moves upward, the pressing member 4 provides clearance space for the shock absorber piston rod 201, and can press the strut mount assembly 2 in the first accommodation cavity 111 through the pressing member 4.

Optionally, the pressing member 4 and the first housing 11 may be connected through a screw, threading, or snap-fitting.

According to a second aspect of embodiments of this application, this application provides an air spring 400, including the foregoing air spring support 100.

A main medium for the air spring 400 to implement damping is air. A main principle of the air spring 400 is to fill a sealed volume with air, so that pressure in the cavity is several times or tens of times higher than atmospheric pressure, and change the volume by using a flipping motion of an air spring bladder 300 on a piston to change rigidity of the air spring 400. In this way, impact of a road surface can be buffered and vehicle posture can be ensured, and an increase or a reduction in gas volume implements lifting or lowering of the vehicle, to meet different driving modes and working conditions.

As shown in FIG. 6 and FIG. 7, the air spring 400 includes the air spring support 100, the shock absorber 200, and the air spring bladder 300. The air spring 400 is disposed below a vehicle body of the vehicle, the first housing 11 is configured to connect to the vehicle body of the vehicle, and the shock absorber 200 is disposed below the second housing 12. In addition, the shock absorber piston rod 201 passes through the mounting hole 221 of the inner frame 22 from bottom to top, and is locked onto the inner frame 22 by the fastening nut 7. The second sealing ring 6 is disposed between the shock absorber piston rod 201 and the inner frame 22, to implement air tightness. The air spring bladder 300 is connected to the upper air chamber assembly 1 through a clamping ring 301. Specifically, the air spring bladder 300 is clamped on an outer wall of the second housing 12 through the clamping ring 301, thereby implementing connection and sealing between the air spring bladder 300 and the upper air chamber assembly 1, to complete assembly.

According to a third aspect of embodiments of this application, this application provides a vehicle, including the foregoing air spring 400.

The air spring 400 in this embodiment may be mounted on various vehicles, including gasoline vehicles, diesel vehicles, cars, trucks, buses, hybrid electric vehicles, pure electric vehicles, and the like.

Although some specific embodiments of this application are described in detail by using examples, a person skilled in the art will understand that the foregoing examples are merely for description, but are not intended to limit the scope of this application. A person skilled in the art will understand that modifications may be made to the foregoing embodiments without departing from the scope and spirit of this application. The scope of this application is defined by the appended claims.

## Claims

1. An air spring support (100), wherein the air spring support (100) comprises:
an upper air chamber assembly (1), the upper air chamber assembly (1) being provided with a first accommodation cavity (111); and
a strut mount assembly (2), the strut mount assembly (2) comprising an elastomer (23), the elastomer (23) being provided with a first flange (231), the elastomer (23) comprising a first cavity (234) and a second cavity (235) that are separated by the first flange (231), and the first flange (231) being provided with at least one groove (232), wherein
the strut mount assembly (2) is disposed in the first accommodation cavity (111), the first flange (231) is attached to a bottom wall (111a) of the first accommodation cavity (111), and the first cavity (234) communicates with the second cavity (235) through the groove (232).

2. The air spring support (100) according to claim 1, wherein there are two grooves (232), and the two grooves (232) are symmetrically disposed with respect to an axis of the elastomer (23).

3. The air spring support (100) according to claim 1 or 2, wherein the air spring support (100) further comprises a first sealing ring (5), and the first sealing ring (5) is disposed between the first accommodation cavity (111) and the strut mount assembly (2).

4. The air spring support (100) according to claim 3, wherein the strut mount assembly (2) further comprises an outer frame (21) and an inner frame (22), the elastomer (23) is disposed between the outer frame (21) and the inner frame (22), and the first flange (231) protrudes from the outer frame (21) and the inner frame (22).

5. The air spring support (100) according to claim 4, wherein the outer frame (21) is provided with at least one exhaust groove (211).

6. The air spring support (100) according to claim 4 or 5, wherein the inner frame (22) is provided with a mounting hole (221), and the mounting hole (221) is configured to mount a shock absorber piston rod (201).

7. The air spring support (100) according to any one of claims 1 to 6, wherein the upper air chamber assembly (1) comprises a first housing (11) and a second housing (12), the first housing (11) is connected to the second housing (12), the strut mount assembly (2) is disposed in the first housing (11), and material strength of the first housing (11) is greater than material strength of the second housing (12).

8. The air spring support (100) according to claim 7, wherein the air spring support (100) further comprises a buffer (3), the second housing (12) comprises a second accommodation cavity (121), and the buffer (3) is disposed in the second accommodation cavity (121), and is fastened to a side of the bottom wall (111a) of the first accommodation cavity (111) that is away from the strut mount assembly (2).

9. The air spring support (100) according to any one of claims 1 to 8, wherein the air spring support (100) further comprises a pressing member (4), the elastomer (23) further comprises a second flange (233), and the pressing member (4) is disposed in the first accommodation cavity (111), and is attached to the second flange (233).

10. An air spring (400), wherein the air spring (400) comprises the air spring support (100) according to any one of claims 1 to 9.

11. A vehicle, wherein the vehicle comprises the air spring (400) according to claim 10.
